# FASCICULE DE BREVET EUROPEEN

(11) **EP 3 040 712 B1**
(45) Date de publication et mention de la délivrance du brevet: **05.08.2020**
(21) Numéro de dépôt: 16150014.5
(22) Date de dépôt: 04.01.2016
(51) Int. Cl.: G01N 21/65, B82Y 15/00, B82Y 20/00

(54) **PROCEDE DE FABRICATION D'UN SUBSTRAT POUR DIFFUSION RAMAN EXALTEE DE SURFACE ET SUBSTRAT**
HERSTELLUNGSVERFAHREN EINES SUBSTRATS ZUR VERSTÄRKTEN RAMAN-STREUUNG AN DER OBERFLÄCHE, UND ENTSPRECHENDES SUBSTRAT
METHOD FOR MANUFACTURING A SUBSTRATE FOR SURFACE-ENHANCED RAMAN SCATTERING AND SUBSTRATE

(30) Priorité: 05.01.2015 FR 1550012
(43) Date de publication de la demande: 06.07.2016
(73) Titulaire: Commissariat à l'Energie Atomique et aux Energies Alternatives, 75015 Paris (FR)
(72) Inventeur: LANDIS, Stefan, 38210 TULLINS (FR); REBOUD, Vincent, 75013 PARIS (FR)
(74) Mandataire: Cabinet Camus Lebkiri

(56) Documents cités:
- JP-A- 2013 232 444
- KR-A- 20110 097 354
- US-A1- 2011 267 609
- LI ZHENXING ET AL: "Optical properties of ordered Dot-on-Plate nano-sandwich arrays", MICROELECTRONIC ENGINEERING, vol. 127, 12 avril 2014 (2014-04-12), pages 34-39, XP028868135, ISSN: 0167-9317, DOI: 10.1016/J.MEE.2014.03.045

## Description

### DOMAINE TECHNIQUE

Le domaine de l'invention est celui des procédés de fabrication de substrats pouvant être utilisés pour mettre en œuvre des procédés de diffusion Raman exaltée de surface (SERS). L'invention concerne également un substrat pour diffusion Raman exaltée de surface.

### ETAT DE LA TECHNIQUE ANTERIEUR

La diffusion Raman exaltée de surface (SERS) est l'une des techniques de détection les plus prometteuses pour identifier et caractériser des molécules. Cette technique consiste à déposer les molécules d'intérêt sur un substrat présentant une surface métallique rugueuse. La surface métallique sur laquelle sont fixées les molécules d'intérêt est ensuite éclairée par une lumière monochromatique. Les molécules émettent alors un signal Raman caractéristique de ces molécules, ce qui les rend détectables et identifiables.

Toutefois le signal Raman émis par les molécules présente une intensité très inférieure à l'intensité de la lumière monochromatique avec laquelle on a éclairé les molécules.

Pour remédier à ce problème, on a constaté que la rugosité de la surface métallique du substrat qui porte les molécules d'intérêt permet d'exalter le signal Raman émis par les molécules d'intérêt grâce à l'excitation de plasmons localisés du métal (exaltation par effet électromagnétique) et par transfert de charges entre le métal et la molécule adsorbée (effet chimique). Cette exaltation permet ainsi de détecter spécifiquement des échantillons adsorbés avec des concentrations extrêmement faibles et/ou sur des temps très courts.

Cette exaltation peut se faire grâce à des « points chauds » (« hot spots » en anglais). Ces points chauds sont des zones du substrat au niveau desquelles le champ électromagnétique est localisé et intense. Pour cela, les points chauds présentent généralement des dimensions inférieures à la longueur d'onde de la lumière monochromatique.

L'art antérieur connait ainsi des procédés permettant de réaliser des points chauds en surface d'un substrat. Ces points chauds peuvent être formés par des cavités ou par des effets de pointe. Ainsi, le document Appl. Phys. Lett. 97, 063106 2010, Nanoletters, 9, 4505, 2009 décrit des points chauds formés par des pointes. Le document Nano Lett. 11 , 2538, 2011 ; J. Vac. Sci. Technol. B 27, 2640 (2009) décrit quant à lui des points chauds formés par des cavités.

Le document JP 2013 232444 A décrit un procédé de fabrication d'un substrat SERS comportant une étape de dépôt d'une multicouche de Au-SiO₂ et une étape de gravure sélective d'une partie de chaque extrémité de chaque couche de SiO₂ de façon à former une cavité entre les extrémités de deux couches d'or successivement.

Toutefois, les méthodes de formation des points chauds de l'art antérieur utilisent des technologies de structuration pouvant atteindre de très hautes résolutions spatiales et elles sont donc complexes et très couteuses. En outre, elles ne permettent généralement pas de produire des substrats présentant une forte densité de points chauds, de sorte que l'augmentation de l'intensité lumineuse émise par les molécules d'intérêt est limitée.

### EXPOSE DE L'INVENTION

L'invention vise à remédier aux inconvénients de l'état de la technique en proposant un procédé de fabrication d'un substrat pour diffusion Raman exaltée de surface qui soit simple à mettre en œuvre, et qui permette une augmentation constante de l'intensité lumineuse émise par les molécules sur l'ensemble du substrat.

Un autre objet de l'invention est de proposer un procédé de fabrication d'un substrat pour diffusion Raman exaltée de surface qui soit reproductible et fiable, qui permette une forte augmentation de l'intensité lumineuse émise par les molécules d'intérêt et qui présente une forte densité de points chauds.

Un autre objet de l'invention est de proposer un procédé de fabrication d'un substrat pour diffusion Raman exaltée de surface qui permette de réaliser simultanément un grand nombre de substrats identiques.

Pour ce faire, un premier aspect de l'invention concerne un procédé de fabrication d'un substrat pour diffusion Raman exaltée de surface, le procédé comportant les étapes suivantes :
- (a) dépôt d'une multicouche sur une surface supérieure d'un support, la multicouche comportant au moins deux couches métalliques séparées l'une de l'autre par une couche intercalaire, la couche intercalaire pouvant être gravée sélectivement par rapport aux couches métalliques;
- (b) gravure de la multicouche de façon à former au moins une tranchée à travers la multicouche, la tranchée étant délimitée par des extrémités de chacune des couches de la multicouche;
- (c) gravure sélective d'une partie de chaque extrémité de chaque couche intercalaire de façon à former une cavité entre les extrémités de deux couches métalliques successives de sorte que les extrémités de deux couches métalliques successives forment des picots métalliques séparés par une cavité;
- (d) formation d'un système optique réfléchissant dans chaque tranchée, le système optique réfléchissant étant agencé pour diriger à l'intérieur des cavités une lumière incidente arrivant suivant un angle α par rapport à la surface supérieure du support, et pour ne pas produire de diffusion Raman exaltée de surface, la formation du système optique réfléchissant comportant une étape de formation d'un motif microstructuré faisant saillie de la surface supérieure du support.

Le système optique réfléchissant est configuré pour diriger à l'intérieur des cavités une lumière incidente arrivant suivant un angle α par rapport à la surface supérieure du support. Le système optique réfléchissant ne produit pas de diffusion Raman exaltée de surface. Par conséquent, seule la direction de la lumière incidente est modifiée lorsqu'elle arrive sur le système optique réfléchissant. En particulier, le système optique réfléchissant ne filtre pas les longueurs d'onde. Le système optique réfléchissant réfléchit toutes les longueurs d'onde qu'il a reçues dans la cavité. Il n'en absorbe aucune. Le système optique réfléchissant ne diffuse pas la lumière mais la réfléchit.

Le système optique réfléchissant permet également de rediriger vers le système de collection la lumière diffusée (SERS) par les cavités. Il y a donc un double usage :
- Il envoie la lumière dans les cavités ;
- il renvoie également la lumière émise depuis les cavités vers le détecteur de lumière.

Le procédé propose donc de déposer une multicouche sur une surface plane. On réalise ensuite localement une coupe dans l'épaisseur de cette multicouche de façon à former au moins une tranchée dans la multicouche. On effectue ensuite un retrait partiel sélectif de chaque couche intercalaire. On obtient ainsi des nanostructures métalliques séparées par des espaces dont les dimensions peuvent être parfaitement contrôlées en contrôlant l'épaisseur de la couche intercalaire déposée. On forme ensuite un système optique dans la tranchée de façon à diriger une lumière incidente arrivant suivant un angle α par rapport à la surface supérieure du support dans les cavités formées. En effet, en supposant par exemple que la lumière incidente arrive suivant une direction normale au substrat, les cavités formées entre les picots métalliques ne sont pas directement accessibles à cette lumière incidente. Il est alors avantageux d'ajouter un système optique de tel sorte que la lumière incidente soit déviée afin qu'elle pénètre dans les cavités. Ce système optique permettra également de récupérer le signal électromagnétique généré par le substrat au niveau de la tranche de la multicouche. On peut ensuite déposer des molécules à détecter à la surface du substrat. On obtient ainsi un substrat pour diffusion Raman exaltée de surface permettant un renforcement localisé du champ électromagnétique quand il est soumis à une radiation électromagnétique incidente à une longueur d'onde prédéfinie.

Le procédé permet donc de fabriquer très facilement des picots métalliques de dimensions nanométriques séparés par des cavités de dimensions nanométriques sans avoir recourt à des procédés de gravure agressifs. En outre, la largeur des picots et des cavités est très bien contrôlée puisqu'elle est déterminée par l'épaisseur des couches déposées. Cette épaisseur est facile à contrôler.

Le procédé permet donc d'obtenir facilement un substrat permettant un renforcement du champ électromagnétique. L'intensité du champ électromagnétique obtenu grâce au substrat ainsi formé peut ainsi être entre 10 fois et plusieurs milliers de fois supérieure à celle obtenue avec les substrats de l'art antérieur.

Dans le cadre des revendications annexées, le procédé selon l'invention peut également présenter une ou plusieurs des caractéristiques ci-après prises individuellement ou selon toutes les combinaisons techniquement possibles.

Selon différents modes de réalisation :
- les étapes (a), (b) et (c) peuvent avoir lieu avant l'étape (d), ou alors
- l'étape (d) peut avoir lieu avant les étapes (a), (b) et (c).

En effet, comme on le verra dans la suite, on peut choisir de réaliser d'abord une tranchée de la multicouche, puis de former un système optique dans cette tranchée ou alors on peut choisir de former d'abord le système optique et de déposer la multicouche de part et d'autre de ce système optique.

Avantageusement, l'étape (b) de gravure de la multicouche comporte les étapes suivantes :
- dépôt d'une résine sur la multicouche ;
- gravure de la résine par lithographie ;
- gravure de la multicouche par gravure sèche.

Selon l'invention, l'étape de formation du système optique comporte une étape de formation d'un motif microstructuré sur la surface supérieure du support. Ce motif microstructuré présente de préférence des parois inclinées par rapport à la surface de l'échantillon, ce qui permet de diriger la lumière incidente dans les cavités de la multicouche.

Avantageusement, l'étape de formation du système optique comporte une étape de dépôt d'une couche réfléchissante sur le motif microstructuré, ce qui permet d'augmenter la quantité de lumière incidente reçue par les cavités et inversement ce qui permet d'augmenter la quantité de signal Raman collecté.

Un deuxième aspect de l'invention concerne un substrat pour diffusion Raman exaltée de surface comportant :
- un support comportant une surface supérieure ;
- une multicouche déposée sur la surface supérieure du support, la multicouche comportant au moins deux couches métalliques séparées l'une de l'autre par une couche intercalaire, la couche intercalaire pouvant être gravée sélectivement par rapport aux couches métalliques, la multicouche étant traversée par au moins une tranchée délimitée par des extrémités de chacune des couches de la multicouche, chaque extrémité de chaque couche intercalaire étant en retrait par rapport à l'extrémité de chaque couche métallique adjacente à cette couche intercalaire de sorte que les extrémités de deux couches métalliques successives forment des picots métalliques séparés par une cavité ;
- un système optique réfléchissant disposé dans chaque tranchée, le système optique réfléchissant étant agencé pour diriger à l'intérieur des cavités une lumière incidente arrivant suivant un angle α par rapport à la surface supérieure du support et pour ne pas produire de diffusion Raman exaltée de surface, le système optique réfléchissant comportant un motif microstructuré faisant saillie de la surface supérieure du support.

Un tel substrat comporte de multiples points chauds au niveau des cavités situées entre les extrémités des couches métalliques, ce qui permet d'exalter fortement le signal Raman émis par les molécules d'intérêt déposées sur ce substrat grâce à l'excitation de plasmons localisés du métal (exaltation par effet électromagnétique). Un tel substrat permet donc d'augmenter l'intensité lumineuse émise par des molécules d'intérêt qui sont déposées à sa surface de sorte qu'il permet une détection plus rapide de ces molécules d'intérêt.

Dans le cadre des revendications annexées, le substrat selon le deuxième aspect de l'invention peut présenter une ou plusieurs des caractéristiques ci-après prises individuellement ou selon toutes les combinaisons techniquement possibles.

La couche intercalaire est de préférence une couche diélectrique.

Avantageusement, la multicouche s'étend parallèlement à la surface du support, ce qui permet de déposer la multicouche directement sur la surface du support de sorte que le procédé de fabrication du substrat est facilité.

Avantageusement, chaque tranchée s'étend suivant une direction normale à la surface du support, ce qui permet également de faciliter la fabrication du support.

Avantageusement, chaque cavité s'étend suivant une direction parallèle à la surface supérieure du support.

Selon l'invention, le système optique réfléchissant comporte un motif microstructuré faisant saillie de la surface supérieure du support.

Avantageusement, le motif microstructuré est recouvert d'une couche réfléchissante.

### BREVES DESCRIPTION DES FIGURES

D'autres caractéristiques et avantages de l'invention ressortiront à la lecture de la description détaillée qui suit, en référence aux figures annexées, qui représentent :
- Les figures 1a à 1f, des étapes d'un procédé selon un mode de réalisation de l'invention ;
- Les figures 2a et 2b, des étapes alternatives d'un procédé selon un autre mode de réalisation de l'invention ;
- Les figures 3a et 3b, un substrat selon un mode de réalisation de l'invention.

### DESCRIPTION DETAILLEE D'AU MOINS UN MODE DE REALISATION

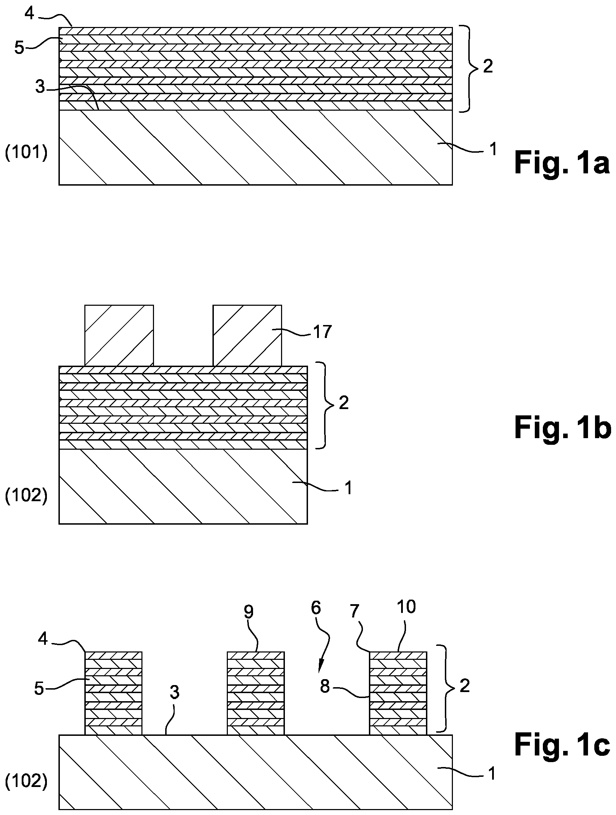

Les figures 1a à 1f représentent les différentes étapes d'un procédé selon un mode de réalisation de l'invention.

En référence à la figure 1a, le procédé comporte une première étape 101 de dépôt d'une multicouche 2 sur une surface supérieure 3 d'un support 1. Selon différents modes de réalisation, le support 1 peut être en silicium, métal, verre. Par ailleurs, la surface supérieure 3 peut être recouverte par une couche d'oxyde, et notamment par une couche d'oxyde de silicium.

La multicouche 2 comporte une alternance de couches métalliques 4 et de couche intercalaires 5, deux couches métalliques 4 successives étant séparées par une couche intercalaire 5.

Les couches métalliques 4 sont de préférence constituées de l'un des matériaux suivants : or, argent, cuivre, aluminium. Selon différents modes de réalisation, les couches métalliques 4 peuvent être toutes constituées du même matériau, ou alors elles peuvent être constituées au moins deux par deux avec le même matériau. On peut alors avoir différentes paires de couches métalliques dans la multicouches ce qui permettrait de faire fonctionner le dispositif à différentes longueurs d'ondes. Par ailleurs, les couches métalliques peuvent toutes présenter la même épaisseur ou alors elles peuvent présenter des épaisseurs différentes, ce qui permet d'obtenir un gradient d'indice progressif. En effet, en ajustant les épaisseurs de chaque couche métallique, on peut faire varier l'indice optique équivalent de la multicouche entre l'indice optique des couches métalliques et celui des couches intercalaires, tant que la somme de l'épaisseur d'une couche métallique et de l'épaisseur d'une couche intercalaire reste inférieure à la longueur d'onde incidente. Le substrat ainsi formé présentera alors des résonnances à plusieurs longueurs d'onde incidentes.

Chaque couche métallique présente de préférence une épaisseur comprise 1 angström et 50 nm, de préférence entre 10 nm et 50 nm.

Les couches intercalaires 5 sont constituées d'un matériau pouvant être gravé sélectivement par rapport aux couches métalliques 4. Selon différents modes de réalisation, les couches intercalaires 5 peuvent être toutes constituées du même matériau, ou alors elles peuvent être constituées de matériaux différents les uns des autres. Dans ce dernier cas, toutes les couches intercalaires sont de préférence constituées d'un matériau pouvant être gravé sélectivement par rapport aux couches métalliques, soit en même temps ou les unes après les autres avec des procédés différents. Alors on peut envisager d'avoir des profondeurs de cavités différentes et donc d'ajuster le fonctionnement et/ou la résonnance du substrat ainsi obtenu.

Selon un mode de réalisation préférentiel, les couches intercalaires 5 sont constituées d'un matériau diélectrique. En effet, les matériaux diélectriques n'absorbent pas ou peu le plasmon généré à la surface des couches métalliques 4. On peut par exemple choisir comme matériau diélectrique de l'oxyde de silicium, de l'alumine, de l'oxyde d'hafnium, du nitrure de silicium, de l'oxyde de titane... Par ailleurs, les couches intercalaires 5 peuvent toutes présenter la même épaisseur ou alors elles peuvent présenter des épaisseurs différentes, ce qui permet d'obtenir un gradient d'indice progressif. Le substrat ainsi formé présentera alors des résonnances à plusieurs longueurs d'onde incidentes.

Chaque couche intercalaire présente de préférence une épaisseur comprise entre 1 angström et 20 nm, de préférence entre 10 nm et 20 nm.

On pourrait également envisager de réaliser les couches intercalaires dans des matériaux métalliques. Toutefois, dans ce cas, la profondeur des cavités creusées dans les couches intercalaires devra être plus importante que dans le mode de réalisation précédent, de façon à ce que les couches intercalaires n'absorbent pas le plasmon généré à la surface des couches métalliques.

Les couches de la multicouche sont de préférence déposées par une méthode de dépôt conforme de sorte que l'épaisseur de la multicouche est sensiblement la même sur toute la surface supérieure du support. On peut pour cela déposer les couches de la multicouche par dépôt physique en phase vapeur, par dépôt par électro déposition dit ECD, ou par dépôt électrochimique par exemple.

Comme représenté sur les figures 1b et 1c, le procédé comporte ensuite une étape 102 de gravure de la multicouche 2 de façon à former au moins une tranchée 6 à travers la multicouche, la tranchée 6 étant délimitée par des extrémités 7, 8 de chacune des couches 4, 5 de la multicouche. La tranchée 6 sépare donc la multicouche 2 en au moins deux segments 9, 10 situés de part et d'autre de la tranchée.

Pour cela, le procédé peut par exemple comporter une première étape représentée sur la figure 1b au cours de laquelle un masque en résine 17 est formé sur la multicouche. Ce masque en résine 17 peut par exemple être formé grâce à une étape de dépôt d'une couche de résine, par exemple par dépôt à la tournette, puis par une étape de lithographie, par exemple optique, électronique, nanoimpression, par AFM...La multicouche 2 est ensuite gravée, par exemple par gravure sèche, au travers du masque. L'étape de gravure sèche de la multicouche peut par exemple être effectuée par une étape de gravure ionique réactive ou par usinage ionique. Comme représenté sur la figure 1c, on obtient à l'issue de cette étape 102 des segments 9, 10 de multicouche séparés par des tranchées 6, chaque segment s'étendant parallèlement à la surface supérieure 3 du support 1. La tranchée 6 est délimitée par les extrémités 7, 8 des couches métalliques 4 et des couches intercalaires 5.

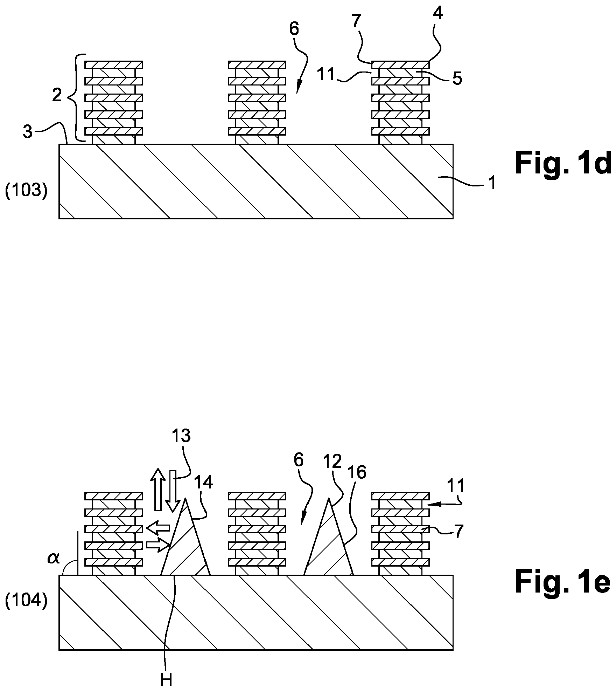

En référence à la figure 1d, le procédé comporte ensuite une étape 103 de gravure sélective partielle d'une partie des extrémités 8 des couches intercalaires 5 de façon à former des cavités entre les extrémités 7 de deux couches métalliques successives. Les extrémités 7 des couches métalliques 4 forment alors des picots métalliques 7 séparés par des cavités 11. Les cavités 11 s'étendent parallèlement à la surface supérieure 3 du support 1. Chaque cavité 11 présente de préférence une profondeur comprise entre 1 angström et 200 nm, et de préférence entre 10 nm et 100 nm. Cette étape de gravure est partielle de façon à ne pas affecter la stabilité des couches métalliques, et de façon à ce qu'elles ne s'effondrent pas les unes sur les autres.

En référence à la figure 1e, le procédé comporte une étape 104 de formation d'un système optique 12 dans chaque tranchée 6. Chaque système optique 12 est agencé de façon à diriger à l'intérieur des cavités 11 une lumière incidente 13 arrivant suivant un angle α par rapport à la surface supérieure du support. Dans ce mode de réalisation, chaque système optique 12 est configuré de façon à diriger une lumière incidente 13 arrivant perpendiculairement à la surface supérieure 3 du support 1 dans les cavités 11.

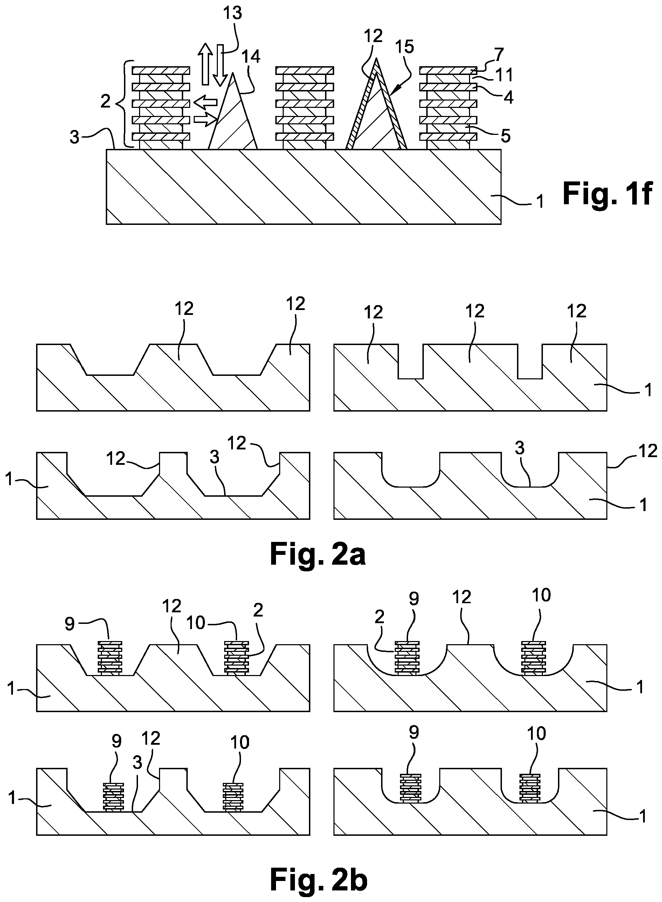

Pour cela, chaque système optique comporte un motif microstructuré 14 faisant saillie de la surface supérieure 3 du support. Ce motif microstructuré comporte de préférence une paroi latérale 16 formant un angle sensiblement égal à a/2, avec α qui est l'angle formé entre la lumière incidente et la surface supérieure du support. Ainsi, dans ce mode de réalisation, où chaque système optique est configuré pour rediriger une lumière arrivant perpendiculairement à la surface du support dans les cavités 11, chaque motif microstructuré comporte donc de préférence une paroi latérale inclinée à 45° par rapport à la surface supérieure 3 du support. Toutefois, les motifs microstructurés pourraient présenter des formes plus complexes comme représenté en référence à la figure 2a.

Chaque motif microstructuré peut être réalisé dans un des matériaux suivants : polycarbonate, résine acrylique, polymère à base de polystyrène (PS), poly hydroxy styrène (PHS), ou poly méthyl méthacrylate (PMMA).

Par ailleurs, chaque motif microstructuré présente de préférence une hauteur sensiblement égale à la hauteur de la tranchée dans laquelle il se trouve.

Ces systèmes optiques 12 permettent donc de diriger la lumière incidente dans les cavités 11 et ils permettent également de collecter le signal Raman émis par les molécules qui seront déposées à la surface du substrat.

En référence à la figure 1f, le procédé peut également comporter une étape de dépôt d'une couche réfléchissante 15 sur chaque motif microstructuré de façon à augmenter la quantité de lumière incidente dirigée dans les cavités 11 et à augmenter la quantité de signal Raman collecté. La couche réfléchissante 15 est de préférence choisie pour être réfléchissante à la longueur d'onde de la lumière incidente de façon à éviter les pertes d'intensité dans le matériau pour fabriquer ces structures. Ainsi, selon un mode de réalisation, la couche réfléchissante peut être constituée d'une couche d'un ou plusieurs des matériaux suivants : Al, Ti, TiN, Au, Ag. Selon un deuxième mode de réalisation, la couche réfléchissante peut être constituée d'une multicouche de diélectriques, comme par exemple Si02/Si3N4. Ce deuxième mode de réalisation permet de former un miroir de Bragg de haute réflectivité. La couche réfléchissante peut par exemple être déposée par PVD, EVAP ou électrodéposition.

Le procédé peut ensuite comporter une étape de dépôt de molécules à détecter à la surface du substrat ainsi formé.

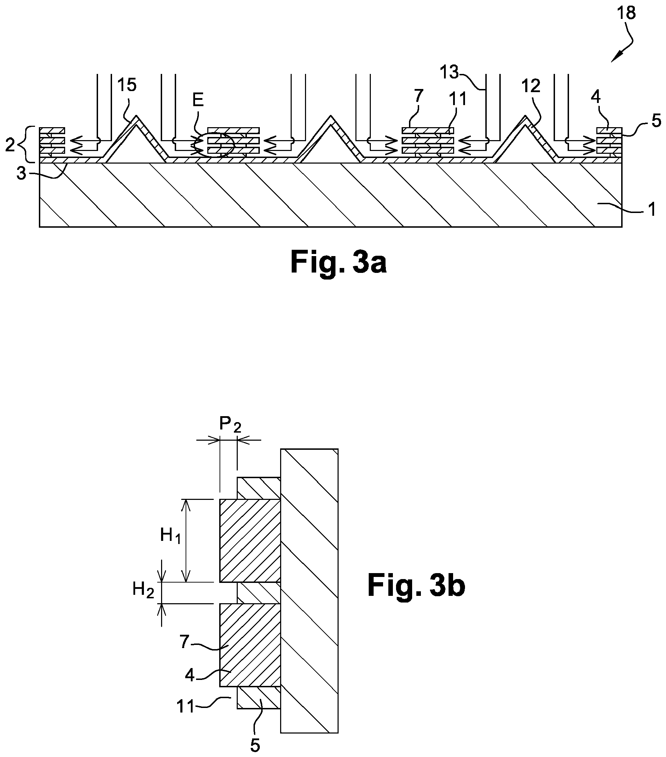

On obtient ainsi un substrat 18 tel que représenté sur les figures 3a et 3b qui améliore l'excitation Raman des molécules à détecter et qui permet ainsi d'améliorer le rapport signal sur bruit de la mesure. En outre, le substrat ainsi obtenu est facile à fabriquer et il présente des dimensions facilement contrôlables.

Le procédé n'est pas limité aux étapes décrites en référence aux figures et des variantes pourraient être envisagées sans sortir du cadre de l'invention, définie par les revendications annexées. Ainsi, dans le procédé décrit en référence aux figures 1a à 1f, les systèmes optiques sont réalisés après les étapes 101 à 103 de formation des picots métalliques séparés par des cavités. Toutefois, comme représenté en référence aux figures 2a et 2b, on pourrait également envisager de réaliser d'abord les systèmes optiques 12 en surface du support 1, et ensuite de former des segments 9, 10 de multicouche 2 entre ces systèmes optiques 12. Dans ce cas, les motifs microstructurés formant les systèmes optiques peuvent être réalisés en gravant directement la surface supérieure du support, de sorte que les motifs microstructurés sont réalisés à partir d'une partie du support qui est gravée de façon à avoir la géométrie voulue. On dépose ensuite la multicouche sur la surface du support microstructurée, puis on grave la multicouche de façon à réaliser les tranchées au niveau des motifs microstructurés et à conserver des segments de multicouche entre deux motifs microstructurés successifs.

### Dimensionnement des picots métalliques et des cavités:

Un procédé de dimensionnement des picots métalliques 7 et des cavités 11 va maintenant être décrit en référence aux figures 3a et 3b.

Les dimensions choisies pour les picots et les cavités sont primordiales pour obtenir une résonnance du champ électromagnétique. Ces dimensions peuvent être déterminées selon la méthode expliquée ci-après.

On choisit d'abord la longueur d'onde incidente de la lumière incidente qui sera envoyée sur les molécules à détecter. Cette longueur d'onde incidente peut être choisie en fonction des molécules à détecter et/ou en fonction du matériel à la disposition de l'utilisateur. Dans ce mode de réalisation, on choisit par exemple une longueur d'onde incidente de 785 nm.

On choisit ensuite les matériaux qui vont constituer les couches métalliques et les couches intercalaires de la multicouche 2. Ces matériaux peuvent être choisis en fonction des procédés de dépôt disponibles, et/ou pour des raisons d'affinités chimiques avec les molécules à détecter, et/ou en fonction des propriétés d'absorption de ces matériaux vis-à-vis de la longueur d'onde incidente. Dans ce mode de réalisation, on choisit par exemple de réaliser des couches métalliques en or et des couches intercalaires en SiO₂.

Le procédé comporte ensuite une étape de dimensionnement des cavités 11 et des picots métalliques 7 en fonction de la longueur d'onde incidente choisie et des matériaux choisis pour la multicouche. En effet, il est possible de déterminer les dimensions des picots et des cavités de façon à ce que le substrat présente une résonnance à la longueur d'onde de la lumière incidente. Pour cela, on détermine les dimensions des cavités 11 et des picots 7 qui minimisent la réflectivité du substrat et donc qui maximisent le renforcement du champ électromagnétique quand la lumière incidente vient illuminer une surface perpendiculaire à la surface supérieure 3 de substrat. On peut par exemple utiliser pour cela une méthode dite « d'analyse rigoureuse des ondes couplées » (ou RCWA pour « rigourous coupled wave analysis) ou une méthode dite de « domaine temporel des différences finies » (ou FDTD pour « finite différence time domain »). Ces méthodes permettent de simuler la réflectivité d'une surface en fonction de sa géométrie et de sa composition.

Ces méthodes permettent de déterminer les dimensions qui minimisent la réflectivité du substrat et maximisent le champ électromagnétique localement. Ce sont notamment les dimensions suivantes :
- l'épaisseur H1 de chaque picot métallique, et donc l'épaisseur H1 de chaque couche métallique déposée ;
- l'épaisseur H2 de chaque cavité, et donc l'épaisseur H2 de chaque couche intercalaire déposée ;
- la profondeur P2 de chaque cavité ;
- le nombre de couches dans la multicouche.

Naturellement l'invention n'est pas limitée aux modes de réalisation décrits et des variantes pourraient être envisagées sans sortir du cadre de l'invention, définie par les revendications annexées.

## Revendications

1. Procédé de fabrication d'un substrat (18) pour diffusion Raman exaltée de surface, le procédé comportant les étapes suivantes :
- (a) dépôt d'une multicouche (2) sur une surface supérieure (3) d'un support (1), la multicouche (2) comportant au moins deux couches métalliques (4) séparées l'une de l'autre par une couche intercalaire (5), la couche intercalaire (5) pouvant être gravée sélectivement par rapport aux couches métalliques (4);
- (b) gravure de la multicouche (2) de façon à former au moins une tranchée (6) à travers la multicouche (2), la tranchée (6) étant délimitée par des extrémités (7, 8) de chacune des couches (4, 5) de la multicouche (2);
- (c) gravure sélective d'une partie de chaque extrémité (8) de chaque couche intercalaire (5) de façon à former une cavité (11) entre les extrémités (7) de deux couches métalliques (4) successives de sorte que les extrémités (7) de deux couches métalliques (4) successives forment des picots métalliques (7) séparés par une cavité (11);
- (d) formation d'un système optique (12) réfléchissant dans chaque tranchée (6), le système optique (12) réfléchissant étant agencé pour diriger à l'intérieur des cavités (11) une lumière incidente (13) arrivant suivant un angle α par rapport à la surface supérieure (3) du support (1) et pour ne pas produire de diffusion Raman exaltée de surface, la formation du système optique (12) réfléchissant comportant une étape de formation d'un motif microstructuré (14) faisant saillie de la surface supérieure (3) du support (1).

2. Procédé selon la revendication 1, dans lequel les étapes (a), (b) et (c) ont lieu avant l'étape (d).

3. Procédé selon la revendication 1, dans lequel l'étape (d) a lieu avant les étapes (a), (b) et (c).

4. Procédé selon l'une des revendications précédentes, dans lequel l'étape (b) de gravure de la multicouche comporte les étapes suivantes :
- dépôt d'une résine sur la multicouche ;
- gravure de la résine par lithographie ;
- gravure de la multicouche (2) par gravure sèche.

5. Procédé selon l'une des revendications précédentes, dans lequel l'étape de formation du système optique (12) comporte une étape de dépôt d'une couche réfléchissante (15) sur le motif microstructuré (14).

6. Substrat (18) pour diffusion Raman exaltée de surface comportant :
- un support (1) comportant une surface supérieure (3);
- une multicouche (2) déposée sur la surface supérieure (3) du support (1), la multicouche (2) comportant au moins deux couches métalliques (4) séparées l'une de l'autre par une couche intercalaire (5), la couche intercalaire (5) pouvant être gravée sélectivement par rapport aux couches métalliques (4), la multicouche (2) étant traversée par au moins une tranchée (6) délimitée par des extrémités (7, 8) de chacune des couches (4, 5) de la multicouche (2), chaque extrémité (8) de chaque couche intercalaire (5) étant en retrait par rapport à l'extrémité (7) de chaque couche métallique (4) adjacente à cette couche intercalaire (5) de sorte que les extrémités (7) de deux couches métalliques (4) successives forment des picots métalliques (7) séparés par une cavité (11) ;
- un système optique (12) réfléchissant disposé dans chaque tranchée (6), le système optique (12) réfléchissant étant agencé pour diriger à l'intérieur des cavités (11) une lumière incidente (13) arrivant suivant un angle α par rapport à la surface supérieure (3) du support (1) et pour ne pas produire de diffusion Raman exaltée de surface, le système optique (12) réfléchissant comportant un motif microstructuré (14) faisant saillie de la surface supérieure (3) du support (1).

7. Substrat (18) selon la revendication précédente, dans lequel la multicouche (2) s'étend parallèlement à la surface (3) du support (1).

8. Substrat (18) selon l'une des revendications 6 ou 7, dans lequel chaque tranchée (6) s'étend suivant une direction normale à la surface (3) du support (1).

9. Substrat (18) selon l'une des revendications 6 à 8, dans lequel chaque cavité (11) s'étend suivant une direction parallèle à la surface supérieure (3) du support (1).

10. Substrat (18) selon l'une des revendications précédentes, dans lequel le motif microstructuré (14) est recouvert d'une couche réfléchissante (15).

## Patentansprüche

1. Herstellungsverfahren eines Substrats (18) zur oberflächenverstärkten Raman-Streuung, wobei das Verfahren die folgenden Schritte umfasst:
(a) Aufbringen einer Mehrfachschicht (2) auf einer oberen Fläche (3) eines Trägers (1), wobei die Mehrfachschicht (2) wenigstens zwei Metallschichten (4) umfasst, die voneinander durch eine Zwischenschicht (5) getrennt sind, wobei die Zwischenschicht (5) in Bezug auf die Metallschichten (4) selektiv geglättet werden können;
(b) Ätzen der Mehrfachschicht (2) derart, dass wenigstens ein Graben (6) durch die Mehrfachschicht (2) gebildet wird, wobei der Graben (6) durch Enden (7, 8) jeder Schicht (4, 5) der Mehrfachschicht (2) begrenzt wird;
(c) Selektives Ätzen eines Teils jedes Endes (8) jeder Zwischenschicht (5) derart, das eine Ausnehmung (11) zwischen den Enden (7) von zwei sukzessiven Metallschichten (4) derart gebildet wird, dass die Enden (7) von zwei sukzessiven Metallschichten (4) Metallzäckchen (7) bilden, die durch eine Ausnehmung (11) getrennt werden;
(d) Bildung eines optischen Systems (12), das in jedem Graben (6) reflektiert, wobei das reflektierende optische System (12) angeordnet ist, um im Innern der Ausnehmungen (11) ein einfallendes Lichts (13) zu leiten, das gemäß einem Winkel α in Bezug auf die obere Fläche (3) des Trägers (1) eintrifft, und um keine oberflächenverstärkte Raman-Streuung zu produzieren, wobei die Bildung des reflektierenden optischen Systems (12) einen Bildungsschritt eines mikrostrukturierten Musters (14) umfasst, das aus der oberen Fläche (3) des Trägers (1) hervorsteht.

2. Verfahren gemäß Anspruch 1, bei dem die Schritte (a), (b) und (c) vor Schritt (d) erfolgen.

3. Verfahren gemäß Anspruch 1, bei dem der Schritt (d) vor den Schritten (a), (b), und (c) erfolgt.

4. Verfahren gemäß einem der voranstehenden Ansprüche, bei dem der Ätzschritt (b) der Mehrfachschicht die folgenden Schritte umfasst:
- Aufbringen eines Harzes auf der Mehrfachschicht;
- Ätzen des Harzes per Lithographie;
- Ätzen der Mehrfachschicht (2) per Trockenätzen.

5. Verfahren gemäß einem der voranstehenden Ansprüche, bei dem der Bildungsschritt des optischen Systems (12) einen Aufbringschritt einer reflektierenden Schicht (15) auf dem genannten mikrostrukturierten Muster (14) umfasst.

6. Substrat (18) zur oberflächenverstärkten Raman-Streuung, umfassend:
- einen Träger (1), umfassend eine obere Fläche (3);
- eine Mehrfachschicht (2), die auf der oberen Fläche (3) des Trägers (1) aufgebracht wird, wobei die Mehrfachschicht (2) wenigstens zwei Metallschichten (4) umfasst, die voneinander durch eine Zwischenschicht (5) getrennt sind, wobei die Zwischenschicht (5) in Bezug auf die Metallschichten (4) selektiv geätzt sein können, wobei die Mehrfachschicht (2) durch wenigstens einen Graben (6) durchquert wird, der durch Enden (7, 8) jeder Schicht (4, 5) der Mehrfachschicht (2) begrenzt wird, wobei jedes Ende (8) jeder Zwischenschicht (5) in Bezug auf das Ende (7) jeder Metallschicht (4) zurückgesetzt ist, die an dieser Zwischenschicht (5) anliegt, derart, dass die Enden (7) von zwei sukzessiven Metallschichten (4) Metallzäckchen (7) bilden, die durch eine Ausnehmung (11) getrennt sind;
- ein reflektierendes optisches System (12), das in jedem Graben (6) angeordnet ist, wobei das reflektierende optische System (12) angeordnet ist, um im Innern der Ausnehmungen (11) ein einfallendes Licht (13) zu führen, das gemäß einem Winkel α in Bezug auf die obere Fläche (3) des Trägers (1) eintrifft und um keine oberflächenverstärkte Raman-Streuung zu produzieren, wobei das reflektierende optische System (12) ein mikrostrukturiertes Muster (14) umfasst, das von der oberen Fläche (3) des Trägers (1) hervorsteht.

7. Substrat (18) gemäß dem voranstehenden Anspruch, bei dem die Mehrfachschicht (2) sich parallel zur Fläche (3) des Trägers (1) erstreckt.

8. Substrat (18) gemäß einem der Ansprüche 6 oder 7, bei dem jeder Graben (6) sich gemäß einer zur Oberfläche (3) des Trägers (1) senkrechten Richtung erstreckt.

9. Substrat (18) gemäß einem der Ansprüche 6 bis 8, bei dem jede Ausnehmung (11) sich gemäß einer zur oberen Fläche (3) des Substrats (1) parallelen Richtung erstreckt.

10. Substrat (18) gemäß einem der voranstehenden Ansprüche, bei dem das mikrostrukturierte Muster (14) von einer reflektierenden Schicht (15) abgedeckt ist.

## Claims

1. Method for manufacturing a substrate (18) for surface-enhanced Raman spectography, with the method comprising the following steps:
- (a) depositing of a multilayer (2) on an upper surface (3) of a support (1), with the multilayer (2) comprising at least two metal layers (4) separated from each other by an intermediate layer (5), the intermediate layer (5) able to be selectively etched with respect to the metal layers (4);
- (b) etching of the multilayer (2) in such a way as to form at least one trench (6) through the multilayer (2), with the trench (6) being delimited by ends (7, 8) of each one of the layers (4, 5) of the multilayer (2);
- (c) selective etching of a portion of each end (8) of each intermediate layer (5) in such a way as to form a cavity (11) between the ends (7) of two successive metal layers (4) in such a way that the ends (7) of two successive metal layers (4) form metal pins (7) separated by a cavity (11);
- (d) forming of a reflective optical system (12) in each trench (6), with the reflective optical system (12) being arranged to direct inside the cavities (11) an incident light (13) arriving according to an angle α with respect to the upper surface (3) of the support (1) and to not produce any surface-enhanced Raman spectography, the step of forming the reflective optical system (12) comprising a step of forming a microstructured pattern (14) protruding from the upper surface (3) of the support (1).

2. Method according to claim 1, wherein the steps (a), (b) and (c) take place before the step (d).

3. Method according to claim 1, wherein the step (d) take place before the steps (a), (b) and (c).

4. Method according to one of the preceding claims, wherein the step (b) of etching the multilayer comprises the following steps:
- depositing a resin on the multilayer;
- etching the resin by lithography;
- etching of the multilayer (2) by dry etching.

5. Method according to one of the preceding claims, wherein the step of forming the optical system (12) comprises a step of depositing a reflective layer (15) on the microstructured pattern (14).

6. Substrate (18) for surface-enhanced Raman spectography comprising:
- a support (1) comprising an upper surface (3);
- a multilayer (2) deposited on the upper surface (3) of the support (1), with the multilayer (2) comprising at least two metal layers (4) separated from each other by an intermediate layer (5), the intermediate layer (5) able to be selectively etched with respect to the metal layers (4), with the multilayer (2) being passed through by at least one trench (6) delimited by ends (7, 8) of each one of the layers (4, 5) of the multilayer (2), each end (8) of each intermediate layer (5) being set back with respect to the end (7) of each metal layer (4) adjacent to this intermediate layer (5) in such a way that the ends (7) of two successive metal layers (4) form metal pins (7) separated by a cavity (11) ;
- a reflective optical system (12) arranged in each trench (6), with the reflective optical system (12) being arranged to direct inside the cavities (11) an incident light (13) arriving according to an angle α with respect to the upper surface (3) of the support (1) and to not produce any surface-enhanced Raman spectography, the reflective optical system (12) comprising a microstructured pattern (14) protruding from the upper surface (3) of the support (1).

7. Substrate (18) as claimed in the preceding claim, wherein the multilayer (2) extends parallel to the surface (3) of the support (1).

8. Substrate (18) according to one of claims 6 or 7, wherein each trench (6) extends according to a direction normal to the surface (3) of the support (1).

9. Substrate (18) according to one of claims 6 to 8, wherein each cavity (11) extends according to a direction parallel to the upper surface (3) of the support (1).

10. Substrate (18) according to one of the preceding claims, wherein the microstructured pattern (14) is covered with a reflective layer (15) .
